# EUROPÄISCHE PATENTANMELDUNG

(11) **EP 4 757 153 A2**
(43) Veröffentlichungstag der Anmeldung: **10.06.2026**
(21) Anmeldenummer: 26175185.3
(22) Anmeldetag: 28.09.2017
(51) Int. Cl.: H02M 1/00

(54) **SUBMODUL FÜR EINEN MODULAREN MEHRSTUFENUMRICHTER**

(62) Teilanmeldung aus: 17783782.0
(71) Anmelder: Siemens Energy Global GmbH & Co. KG, 81739 München (DE)
(72) Erfinder: Alvarez Valenzuela, Rodrigo Alonso, 90409 Nürnberg (DE); Zenkner, Andreas, 90587 Veitsbronn (DE); Mondal, Gopal, 91058 Erlangen (DE); Hergt, Martin, 90411 Nürnberg (DE); Nielebock, Sebastian, 91301 Forchheim (DE)

(57) **Zusammenfassung**

Die Erfindung betrifft ein Submodul für einen modularen Mehrstufenumrichter, aufweisend einen ersten und zweiten Modulanschluss zur Einbindung des Submoduls in den modularen Mehrstufenumrichter, eine erste Serienschaltung mit zwei in Serie geschalteten Energiespeichern, deren Verbindungspunkt den ersten Modulanschluss bildet, eine zweite Serienschaltung mit einer ersten und zweiten in Serie zueinander geschalteten Schalteinrichtung, deren Verbindungspunkt den zweiten Modulanschluss bildet, wobei die erste und zweite Serienschaltung parallel geschaltet sind und zwischen dem ersten und zweiten Modulanschluss eine bidirektionale Schalteinrichtung angeordnet ist.

## Beschreibung

Die Erfindung betrifft ein Submodul für einen modularen Mehrstufenumrichter.

Ein modularer Mehrstufenumrichter, auch modularer Multilevel Umrichter oder kurz MMC bzw. M2C (nach dem englischen "modular multilevel converter") genannt, ist ein Umrichter zum Umwandeln einer Spannung in eine andere Spannung. Ein modularer Mehrstufenumrichter kann z.B. eine Gleichspannung in eine Wechselspannung umwandeln, d.h. er wird als Wechselrichter verwendet. Ein modularer Mehrstufenumrichter kann außerdem z.B. eine Wechselspannung in eine Gleichspannung umwandeln, d.h. er wird als Gleichrichter verwendet. Weiterhin kann ein modularer Mehrstufenumrichter eine Wechselspannung in eine in der Frequenz und Amplitude unterschiedliche Wechselspannung umwandeln, ohne zunächst eine Gleichspannung zu erzeugen, d.h. er wird als direkter Umrichter verwendet.

Modulare Mehrstufenumrichter können beispielsweise als Wechselrichter in einem Photovoltaik-Kraftwerk, als Transformator in einem Hochspannungs-Gleichstrom-Übertragungssystem (HGÜ) oder einem Bahnstrom-System verwendet werden.

Ein modularer Mehrstufenumrichter als Gleichrichter wird beispielsweise in der Hochspannungs-Gleichstrom-Übertragung benötigt. Dabei wird aus einer Wechselspannung eine Gleichspannung erzeugt, welche zum verlustarmen Transport über weite Übertragungsstrecken hinweg genutzt wird. Nach der Übertragung wird die Gleichspannung wiederum mit einem modularen Mehrstufenumrichter als Wechselrichter in eine Wechselspannung umgewandelt, um diese in das Wechselstromnetz einzuspeisen.

In seinem Aufbau umfasst ein modularer Mehrstufenumrichter zumindest eine Reihenschaltung mit mehreren in Reihe geschalteten Submodulen. EP 2677653 A1 offenbart einen modularen Mehrstufenumrichter, welcher in diesem Fall drei Reihenschaltungen mit 2N Modulen umfasst. Jede der Reihenschaltungen wird durch eine Wechselspannungsleitung in zwei Zweige geteilt. Jeder Zweig wiederum ist über ein Drosselelement mit der Wechselspannungsleitung verbunden. Ferner weist jedes Modul einen Energiespeicher und eine Schaltvorrichtung auf. Der jeweilige Energiespeicher ist dazu eingerichtet, eine elektrische Energie zu speichern. In jedem Modul kann der Energiespeicher zumindest teilweise mit elektrischer Energie (auf-) geladen werden. Mithilfe der Schaltvorrichtung kann gesteuert werden, ob der Energiespeicher des jeweiligen Moduls geladen bzw. entladen werden soll oder ob der Energiespeicher überbrückt werden soll.

Aufgabe der vorliegenden Erfindung ist es, ein verbessertes Submodul für einen modularen Mehrstufenumrichter bereitzustellen.

Diese Aufgabe wird durch ein Submodul mit den Merkmalen von Anspruch 1 gelöst.

Das erfindungsgemäße Submodul für einen modularen Mehrstufenumrichter umfasst eine erste Serienschaltung mit zwei in Serie geschalteten Energiespeichern, deren Verbindungspunkt einen zweiten Modulanschluss bildet und eine zweite Serienschaltung mit einer ersten und zweiten in Serie zueinander geschalteten Schalteinrichtung, deren Verbindungspunkt einen ersten Modulanschluss bildet. Dabei sind die erste und zweite Serienschaltung parallel geschaltet. Schließlich ist zwischen dem ersten und zweiten Modulanschluss eine bidirektionale Schalteinrichtung angeordnet.

Bei den Energiespeichern handelt es sich jeweils um einen einzelnen Kondensator oder mehrere Kondensatoren, die zusammen einen Energiespeicher bilden.

Das erfindungsgemäße Submodul für einen modularen Mehrstufenumrichter umfasst einen ersten und zweiten Modulanschluss zur Einbindung des Submoduls in den modularen Mehrstufenumrichter. Es handelt sich bei dem Submodul also um ein zweipoliges Submodul. Die Modulanschlüsse dienen dem Anschluss des Submoduls, beispielsweise an weitere Submodule. Das Submodul wird mittels der Modulanschlüsse in Reihe mit weiteren Submodulen geschaltet.

Vorteilhaft erlaubt das erfindungsgemäße Submodul eine Zuschaltung eines der beiden Energiespeicher in beiden Polaritäten analog zu einem Vollbrücken-Submodul. Im Gegensatz zum Vollbrücken-Submodul befindet sich in dem Schaltzustand, bei dem das Submodul den Energiespeicher überbrückt, nur die bidirektionale Schalteinrichtung im Strompfad, wodurch vorteilhaft die Leitungsverluste reduziert werden.

Vorteilhafte Ausgestaltungen des erfindungsgemäßen Submoduls gehen aus den von Anspruch 1 abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für das Submodul noch zusätzlich folgende Merkmale vorgesehen werden:
- Die bidirektionale Schalteinrichtung kann so gestaltet sein, dass bei seinem Ausfall eine niederohmige Verbindung geschaffen wird. Mit anderen Worten hat die bidirektionale Schalteinrichtung "conduct-on-fail"-Eigenschaften. Dadurch wird bei einem Ausfall der bidirektionalen Schalteinrichtung das Submodul sicher und dauerhaft überbrückt, sodass ein Umrichter mit einem solchen Submodul den Betrieb fortsetzen kann. Hierzu ist vorteilhaft keine zusätzliche Schaltung mit einem Überbrückungsschalter und einer Überwachungseinrichtung nötig. Es werden also Bauteile, Kosten und Komplexität reduziert.
- Die bidirektionale Schalteinrichtung kann eine Serie aus zwei gegensinnig angeordneten Leistungshalbleiterschaltern umfassen, beispielsweise eine Serie aus zwei gegensinning angeordneten IGBTs oder MOSFETs mit paralleler Diode. Alternativ kann die bidirektionale Schalteinrichtung eine Parallelschaltung zweier gegensinnig angeordneter Leistungshalbleiterschalter umfassen, beispielsweise zweier IGBTs ohne parallele Freilaufdiode. In beiden Fällen ist die Überbrückung der Energiespeicher stromrichtungsunabhängig abschaltbar, wodurch das Submodul vorteilhaft einen Schutz des Wandlers bei einem DC-seitigen Kurzschluss erlaubt.
- Die erste Schalteinrichtung kann einen ersten Leistungshalbleiter umfassen. Insbesondere kann die erste Schalteinrichtung genau den ersten Leistungshalbleiter, also mit anderen Worten nur einen Leistungshalbleiter umfassen. Alternativ kann die erste Schalteinrichtung zusätzlich in Serie zum ersten Leistungshalbleiter einen zweiten Leistungshalbleiter umfassen. Insbesondere kann die erste Schalteinrichtung genau zwei Leistungshalbleiter umfassen. Durch die Serienschaltung zweier Leistungshalbleiter wird die sperrbare Spannung, aber auch die Durchlassverluste erhöht.
- Alternativ zum zweiten Leistungshalbleiter kann die erste Schalteinrichtung auch eine erste Diode in Serie zum ersten Leistungshalbleiter umfassen. Hierdurch werden Aufbau und Ansteuerung vereinfacht.
- Die Aufbauvarianten für die erste Schalteinrichtung können unabhängig von der ersten Schalteinrichtung auch bei der zweiten Schalteinrichtung verwendet werden. So kann die zweite Schalteinrichtung einen einzelnen dritten Leistungshalbleiter umfassen. Mit anderen Worten kann also die zweite Schalteinrichtung genau einen Leistungshalbleiter umfassen. Weiterhin kann die zweite Schalteinrichtung zusätzlich einen vierten Leistungshalbleiter in Serie zum dritten Leistungshalbleiter umfassen. Alternativ kann die zweite Schalteinrichtung anstelle des vierten Leistungshalbleiters eine zweite Diode in Serie zum dritten Leistungshalbleiter aufweisen.
- In einer besonders vorteilhaften Aufbauvariante umfasst die erste Schalteinrichtung genau den ersten Leistungshalbleiter, also mit anderen Worten nur einen Leistungshalbleiter, während die zweite Schalteinrichtung die bereits beschriebene Serienschaltung aus dem dritten und vierten Leistungshalbleiter aufweist. Hierdurch wird eine stärkere Aufladung des zweiten der Energiespeichers ermöglicht, wobei der zweite Energiespeicher derjenige ist, der in Serie zur zweiten Schalteinrichtung angeordnet ist. Ebenso ist es möglich, dass die zweite Schalteinrichtung genau den dritten Leistungshalbleiter, also mit anderen Worten nur einen Leistungshalbleiter aufweist, während die erste Schalteinrichtung die bereits beschriebene Serienschaltung aus dem ersten und zweiten Leistungshalbleiter aufweist.

Das Submodul ist besonders geeignet, um einen modularen Mehrstufenumrichter aufzubauen. Dazu werden mehrere Submodule in Serie geschaltet, um wenigstens zwei Zweige auszubilden. Die Zweige werden paarweise zusammengeschaltet. Bei den Submodulen handelt es sich teilweise oder komplett um erfindungsgemäße Submodule. Es ist möglich, dass alle Submodule gleich aufgebaut sind. Alternativ ist es auch möglich, dass die Submodule verschieden voneinander aufgebaut sind, auch wenn es sich nur um erfindungsgemäße Submodule handelt.

Der modulare Mehrstufenumrichter umfasst eine Steuereinrichtung, die ausgestaltet ist, die Schaltung der Leistungshalbleiter und den Ladezustand der Energiespeicher zu steuern.

Bevorzugt ist die Steuereinrichtung ausgestaltet, für eines oder mehrere der Submodule durch Schaltung der Leistungshalbleiter den Ladezustand der Energiespeicher auf einem ersten Pegel für einen ersten der Energiespeicher und auf einem zweiten Pegel für einen zweiten der Energiespeicher zu halten, wobei der erste Pegel im Bereich zwischen 30% und 70%, insbesondere in einem Bereich zwischen 40% und 60% des zweiten Pegels liegt.

Hierzu ist es zweckmäßig, wenn die in Serie zum zweiten der Energiespeicher liegende Schalteinrichtung diejenige mit zwei in Serie geschalteten Leistungshalbleitern ist. Mit anderen Worten umfasst beispielsweise die zweite Schalteinrichtung zwei serielle Leistungshalbleiter und der zweite Energiespeicher wird mit etwa der doppelten Spannung geladen wie der erste Energiespeicher. Die erste Schalteinrichtung umfasst in diesem Beispiel nur genau einen Leistungshalbleiter.

In dieser Ausführung wird vorteilhaft der erste Energiespeicher mit einer positiven Spannung geladen und der zweite Energiespeicher mit einer negativen Spannung. Die positive Spannung. Die positive Spannung des ersten Energiespeichers ist höher als die negative Spannung des zweiten Energiespeichers.

Vorteilhaft kann bei dieser Betriebsform und diesem Aufbau derjenige Energiespeicher mit der höheren, also der positiven Spannung und der dazugehörige einzelne Leistungshalbleiter für den normalen Betrieb genutzt werden, während in außergewöhnlichen Betriebssituationen der Energiespeicher mit der geringeren, also der negativen Spannung zugeschaltet wird. Dadurch werden im normalen Betrieb die Durchlassverluste im Rahmen der Verluste eines Halbbrücken-Submoduls gehalten, während aber die Schaltmöglichkeiten eines Vollbrücken-Submoduls vorhanden sind für beispielsweise den Fall eines Kurzschlusses.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen. Dabei zeigen:
Figur 1 einen modularen Mehrstufenumrichter mit einer Reihenschaltung von mehreren Submodulen,
Figur 2 ein Submodul,
Figuren 3 und 4 Schalteinrichtungen des Submoduls,
Figuren 5 bis 10 Betriebszustände des Submoduls und
Figur 11 ein weiteres Submodul.

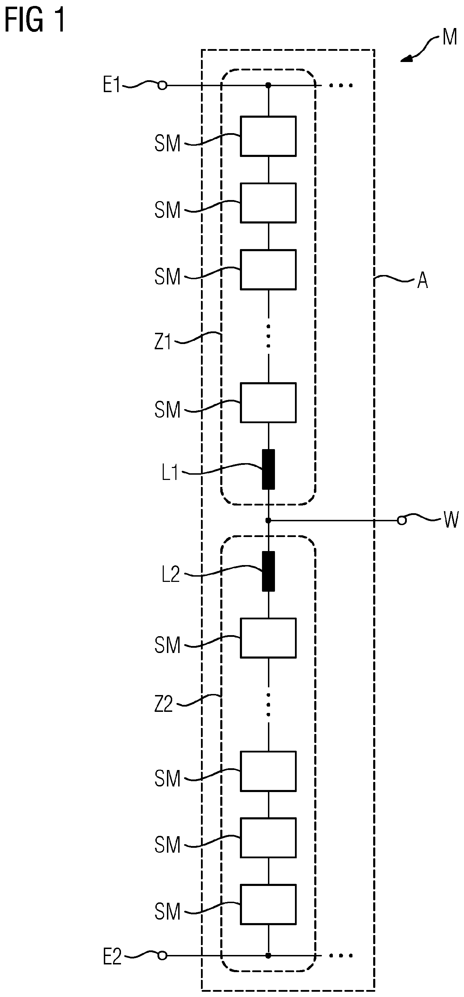

Figur 1 zeigt ein schematisches Schaltbild eines modularen Mehrstufenumrichters M mit mehreren Submodulen SM. Der modulare Mehrstufenumrichter M umfasst zwei Gleichspannungsanschlüsse E1, E2 für den Anschluss einer Gleichspannung bzw. für den Anschluss an ein Gleichstromnetz und einen Wechselspannungsanschluss W für den Anschluss an ein Wechselstromnetz. Weiter ist der modulare Mehrstufenumrichter M beispielsweise dazu eingerichtet, eine Gleichspannung in eine (einphasige) Wechselspannung umzuwandeln. Der Wechselspannungsanschluss W teilt die Reihenschaltung der Submodule SM in zwei Zweige Z1, Z2. Jeder Zweig Z1, Z2 umfasst die gleiche Anzahl an Submodulen SM sowie eine Induktivität L1, L2.

In Figur 1 ist nur ein Paar von Zweigen Z1, Z2 gezeigt, also ein Aufbau für eine einphasige Wechselspannung am Wechselspannungsanschluss W. Für einen dreiphasigen Aufbau würden drei Paare von Zweigen Z1, Z2 parallel zueinander geschaltet.

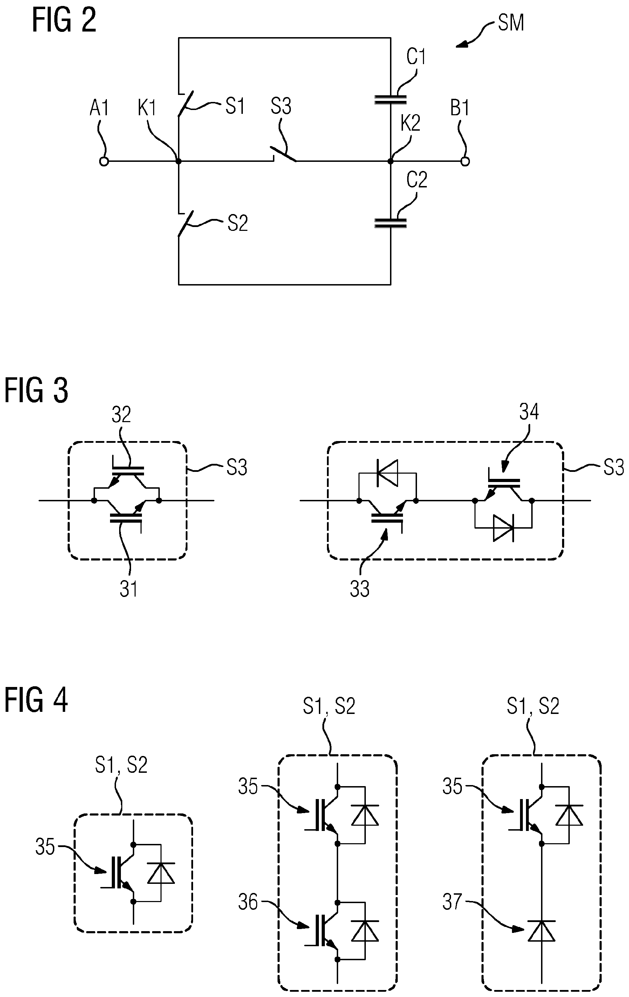

Figur 2 zeigt den prinzipiellen Aufbau eines Submoduls SM. Das Submodul SM umfasst eine erste Serienschaltung aus einer ersten Schalteinrichtung S1 und einer zweiten Schalteinrichtung S2. Weiterhin umfasst das Submodul SM eine zweite Serienschaltung eines ersten und eines zweiten Kondensators C1, C2. Die beiden Serienschaltungen sind parallel zueinander geschaltet, also mit ihren jeweiligen Außenanschlüssen verbunden. Der Mittelpunkt der ersten Serienschaltung bildet einen ersten Knotenpunkt K1. Der Mittelpunkt der zweiten Serienschaltung bildet einen zweiten Knotenpunkt K2. Den ersten und zweiten Knotenpunkt K1, K2 verbindend ist eine dritte Schalteinrichtung S3 angeordnet. Der erste Knotenpunkt K1 bildet einen ersten Submodul-Anschluss A1. Der zweite Knotenpunkt K2 bildet einen zweiten Submodul-Anschluss B1.

Im Betrieb des Submoduls SM wird immer eine der drei Schalteinrichtungen S1, S2, S3 angeschaltet, während die beiden anderen Schalteinrichtungen S1, S2, S3 abgeschaltet sind. Durch Anschalten der dritten Schalteinrichtung S3 und Abschaltung der ersten und zweiten Schalteinrichtungen S1, S2 wird das Submodul SM in einen "0"-Zustand geschaltet, bei dem die Kondensatoren C1, C2 überbrückt sind und somit vom Submodul SM keine Spannung erzeugt wird. Durch Anschalten der ersten Schalteinrichtung S1 und Abschaltung der zweiten und dritten Schalteinrichtungen S2, S3 wird das Submodul SM in einen "+"-Zustand geschaltet, bei dem der erste Kondensator C1 in den Strompfad geschaltet ist und somit seine Spannung der Zweigspannung zugefügt wird. Durch Anschalten der zweiten Schalteinrichtung S2 und Abschaltung der ersten und dritten Schalteinrichtungen S1, S3 wird das Submodul SM in einen "-"-Zustand geschaltet, bei dem der zweite Kondensator C2 in den Strompfad geschaltet ist und somit seine Spannung der Zweigspannung zugefügt wird.

Figur 3 zeigt Ausgestaltungen der dritten Schalteinrichtung S3. Wichtig ist dabei, dass die dritte Schalteinrichtung S3 "conduct-on-fail"-Eigenschaften aufweist, also im Falle eines Ausfalls der dritten Schalteinrichtung S3 eine niederohmige Verbindung an ihrer Stelle sichergestellt ist. Ein solcher Ausfall der dritten Schalteinrichtung S3 führt somit immer in den "0"-Zustand für das Submodul SM. Dadurch wird das Submodul SM im Fehlerfall überbrückt und der modulare Mehrstufenumrichter 10 kann weiterarbeiten. Diese Eigenschaft haben solche Schalter, die bei einem Überstrom legieren und dadurch eine niederohmige Verbindung sicherstellen.

Eine erste Variante für die dritte Schalteinrichtung S3 ist eine gegensinnige Parallelschaltung von zwei IGBTs 31, 32, wobei die IGBTs 31, 32 in diesem Fall ohne jeweilige zusätzliche Dioden verbaut werden. Bei dieser Ausführung ist in jeder Stromrichtung und bei jedem Schaltzustand höchstens ein IGBT im Strompfad. Dadurch werden vorteilhaft die Leitungsverluste im "0"-Zustand gegenüber einem Vollbrücken-Submodul verringert.

In einer zweiten Variante wird die dritte Schalteinrichtung S3 durch eine gegensinnige Serienschaltung von zwei IGBTs 33, 34 gebildet.

Figur 4 zeigt 3 zeigt Ausgestaltungen der erste und der zweiten Schalteinrichtung S1, S2. Die beiden Schalteinrichtungen S1, S2 können unabhängig voneinander als je eine der möglichen Ausgestaltungen realisiert sein, müssen also mit anderen Worten nicht gleichartig aufgebaut sein. Die Schalteinrichtungen S1, S2 können einen einzelnen Schalter 35, beispielsweise einen IGBT, umfassen. Alternativ können die Schalteinrichtungen S1, S2 als eine Serie aus zwei Schaltern 35, 36 aufgebaut sein. In einer weiteren Alternative umfassen die Schalteinrichtungen S1, S2 einen Schalter 35 in Serie zu einer Diode 37.

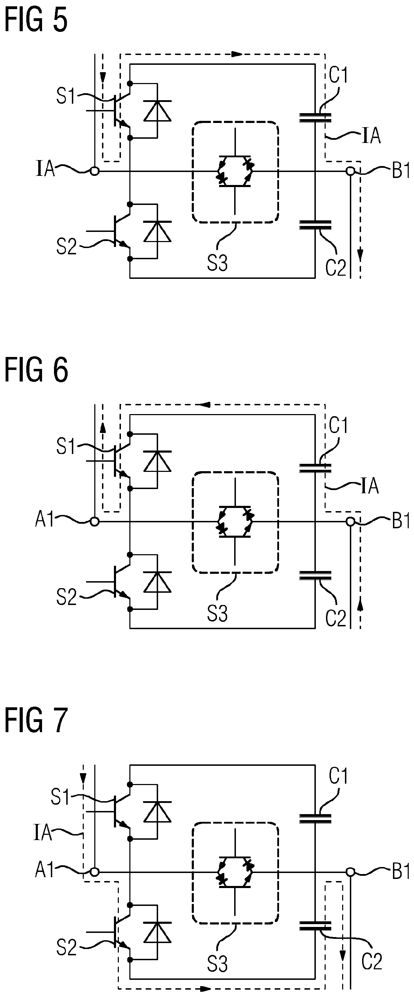

Die Figuren 5 bis 10 zeigen eine mögliche Betriebsform für das Submodul SM. Es wird dabei von einem symmetrischen Betrieb ausgegangen, bei dem eine gleich hohe Spannung an beiden Kondensatoren C1, C2 angestrebt wird und bei dem beide Kondensatoren C1, C2 verwendet werden. Im Submodul SM in den Figuren 5 bis 10 umfassen die erste und die zweite Schalteinrichtung S1, S2 jeweils genau einen IGBT 35 und die dritte Schalteinrichtung S3 wird von einer gegensinnigen Parallelschaltung von zwei IGBTs 31, 32 gebildet.

Figur 5 zeigt das Submodul SM in einem Schaltzustand, in dem eine positive Spannung in Höhe der Spannung VC des ersten Kondensators C1 zwischen den Submodul-Anschlüssen A1, B1 anliegt, wobei der Arm-Stromfluss IA in der Richtung vom ersten Modulanschluss A1 zum zweiten Modulanschluss B1 verläuft. In diesem Fall sind die zweite und dritte Schalteinrichtung S2, S3 und damit ihre jeweiligen Leistungshalbleiter abgeschaltet, während die erste Schalteinrichtung S1 eingeschaltet ist. Der Stromfluss IA führt in diesem Fall über die erste Schalteinrichtung S1 und den ersten Kondensator C1 und führt zu einer Ladung des ersten Kondensators C1.

Figur 6 zeigt das Submodul SM in einem Schaltzustand, in dem eine positive Spannung in Höhe der Spannung VC des ersten Kondensators C1 zwischen den Submodul-Anschlüssen A1, B1 anliegt, wobei der Arm-Stromfluss IA in der Richtung vom zweiten Modulanschluss B1 zum ersten Modulanschluss A1 verläuft. Auch in diesem Fall sind die zweite und dritte Schalteinrichtung S2, S3 und damit ihre jeweiligen Leistungshalbleiter abgeschaltet, während die erste Schalteinrichtung S1 eingeschaltet ist. Der Stromfluss IA führt in diesem Fall über die erste Schalteinrichtung S1 und den ersten Kondensator C1 und führt zu einer Entladung des ersten Kondensators C1.

Figur 7 zeigt das Submodul SM in einem Schaltzustand, in dem eine negative Spannung mit dem Betrag der Spannung VC des zweiten Kondensators C2 zwischen den Submodul-Anschlüssen A1, B1 anliegt, wobei der Arm-Stromfluss IA in der Richtung vom ersten Modulanschluss A1 zum zweiten Modulanschluss B1 verläuft. In diesem Fall sind die erste und dritte Schalteinrichtung S1, S3 und damit ihre jeweiligen Leistungshalbleiter abgeschaltet, während die zweite Schalteinrichtung S2 eingeschaltet ist. Der Stromfluss IA führt über die zweite Schalteinrichtung S2 und den zweiten Kondensator C2 und führt in diesem Fall zu einer Entladung des zweiten Kondensators C2.

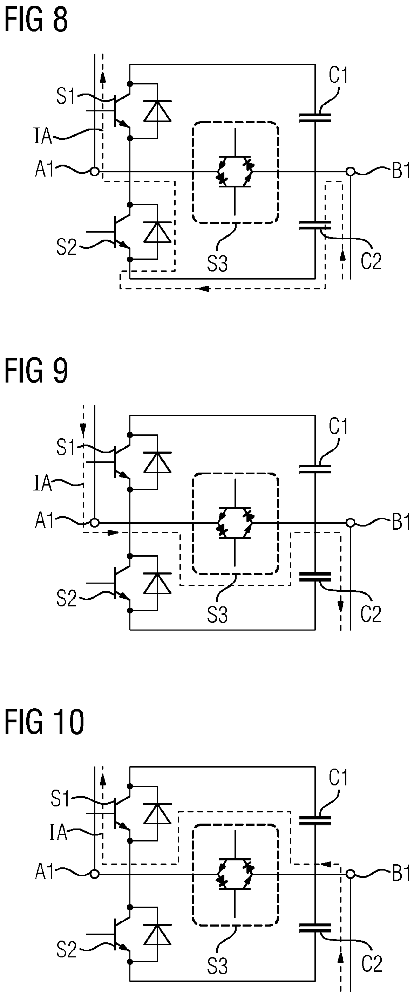

Figur 8 zeigt das Submodul SM in einem Schaltzustand, in dem eine negative Spannung mit dem Betrag der Spannung VC des zweiten Kondensators C2 zwischen den Submodul-Anschlüssen A1, B1 anliegt, wobei der Arm-Stromfluss IA in der Richtung vom zweiten Modulanschluss B1 zum ersten Modulanschluss A1 verläuft. Auch in diesem Fall sind die erste und dritte Schalteinrichtung S1, S3 und damit ihre jeweiligen Leistungshalbleiter abgeschaltet, während die zweite Schalteinrichtung S2 eingeschaltet ist. Der Stromfluss IA führt über die eingebaute Diode der zweiten Schalteinrichtung S2 und den zweiten Kondensator C2 und führt in diesem Fall zu einer Ladung des zweiten Kondensators C2.

Figur 9 zeigt das Submodul SM in einem Schaltzustand, in dem die Energiespeicher, also die Kondensatoren C1, C2 überbrückt sind, also im Wesentlichen keine Spannung zwischen den Submodul-Anschlüssen A1, B1 abfällt, wobei der Arm-Stromfluss IA in der Richtung vom ersten Modulanschluss A1 zum zweiten Modulanschluss B1 verläuft. In diesem Fall sind die erste und zweite Schalteinrichtung S1, S2 und damit ihre jeweiligen Leistungshalbleiter abgeschaltet, während die dritte Schalteinrichtung S3 eingeschaltet ist. Es ist dabei ausreichend, einen der beiden IGBTs 31, 32 einzuschalten. Der Stromfluss IA führt nur über den eingeschalteten der IGBTs 31, 32 der dritten Schalteinrichtung S3. Daher findet in diesem Schaltzustand keine Ladung oder Entladung der Kondensatoren C1, C2 statt.

Figur 10 zeigt das Submodul SM in einem Schaltzustand, in dem die Energiespeicher, also die Kondensatoren C1, C2 überbrückt sind, also im Wesentlichen keine Spannung zwischen den Submodul-Anschlüssen A1, B1 abfällt, wobei der Arm-Stromfluss IA in der Richtung vom zweiten Modulanschluss B1 zum ersten Modulanschluss A1 verläuft. Auch in diesem Fall sind die erste und dritte Schalteinrichtung S1, S3 und damit ihre jeweiligen Leistungshalbleiter abgeschaltet, während die zweite Schalteinrichtung S2 eingeschaltet ist. Es ist dabei ausreichend, im Gegensatz zu Figur 9 den anderen der beiden IGBTs 31, 32 einzuschalten. Der Stromfluss IA führt nur über den eingeschalteten der IGBTs 31, 32 der dritten Schalteinrichtung S3. Daher findet in diesem Schaltzustand keine Ladung oder Entladung der Kondensatoren C1, C2 statt.

Anhand der Figuren 5 bis 8 ist ersichtlich, dass aktives Laden und Entladen, also eine Spannungskontrolle für den ersten und für den zweiten Kondensator C1, C2 möglich ist, wenn die Stromrichtung in genügend geringen zeitlichen Abständen wechselt. Typischerweise wechselt die Stromrichtung mit jeder Halbwelle der Wechselspannung, die am Wechselspannungsanschluss W anliegt oder erzeugt wird.

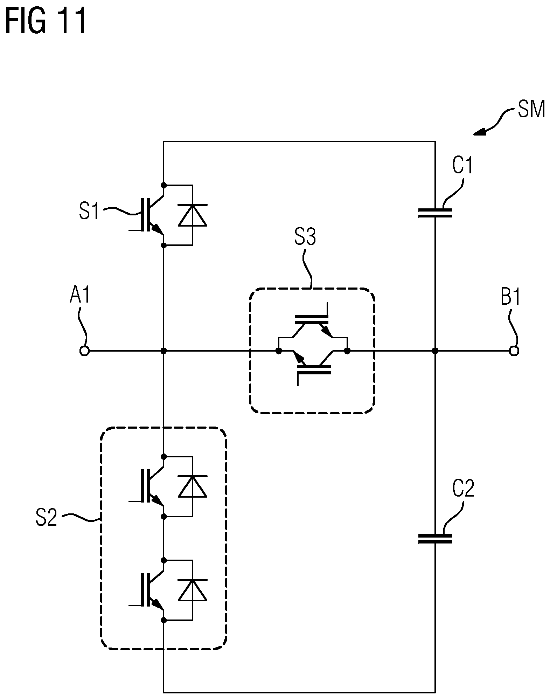

Eine weitere vorteilhafte Betriebsform für ein Submodul SM, das gemäß Fig. 11 aufgebaut ist, besteht darin, dass der zweite Kondensator C2 nur mit einer Spannung von 40 - 60 % der Spannung des ersten Kondensators C1 geladen wird. Weiterhin wird als zweite Schalteinrichtung S2 in diesem Submodul SM eine Serienschaltung zweier IGBTs eingesetzt.

Bei diesem Submodul SM werden im normalen Betrieb nur die erste und dritte Schalteinrichtung S1, S3 verwendet. Dadurch wird das Submodul SM im Wesentlichen wie ein bekanntes Halbbrücken-Submodul verwendet. Im Unterschied zum normalen Halbbrücken-Submodul kann jedoch im Fehlerfall durch die zweite Schalteinrichtung S2 eine Spannung negativer Polarität dargestellt werden. Das Submodul SM bzw. der damit aufgebaute Wandler agieren somit als DC-Breaker. Weiterhin ist durch die conduct-on-fail-Eigenschaft der dritten Schalteinrichtung S3 gewährleistet, dass eine Überbrückung des Submoduls SM im Falle des Ausfalls der dritten Schalteinrichtung S3 vorliegt.

Die zweite Schalteinrichtung S2 wird in diesem Submodul SM nur in Ausnahmefällen (DC-FRT, Sturm) eingesetzt. Sie erlaubt es, die Funktionalität eines Vollbrücken-Submoduls bereitzustellen, wenn das nötig ist, ohne aber die erhöhten Verluste eines Vollbrücken-Submoduls zwingend mitzubringen.

## Patentansprüche

1. Submodul (SM) für einen modularen Mehrstufenumrichter (M), aufweisend:
- einen ersten und zweiten Modulanschluss (A1, B1) zur Einbindung des Submoduls (SM) in den modularen Mehrstufenumrichter (M),
- eine erste Serienschaltung mit zwei in Serie geschalteten Energiespeichern (C1, C2), deren Verbindungspunkt (K2) den zweiten Modulanschluss (B1) bildet,
- eine zweite Serienschaltung mit einer ersten und zweiten in Serie zueinander geschalteten Schalteinrichtung (S1, S2), deren Verbindungspunkt (K1) den ersten Modulanschluss (A1) bildet,
wobei
- die erste und zweite Serienschaltung parallel geschaltet sind,
- zwischen dem ersten und zweiten Modulanschluss (A1, B1) eine bidirektionale Schalteinrichtung (S3) angeordnet ist.

2. Submodul (SM) nach Anspruch 1, bei dem die bidirektionale Schalteinrichtung (S3) so gestaltet ist, dass bei ihrem Ausfall eine niederohmige Verbindung geschaffen wird.

3. Submodul (SM) nach Anspruch 1, bei dem die bidirektionale Schalteinrichtung (S3) eine Serie aus zwei gegensinnig angeordneten Leistungshalbleitern (33, 34) umfasst.

4. Submodul (SM) nach Anspruch 1, bei dem die bidirektionale Schalteinrichtung (S3) eine Parallelschaltung zweier gegensinnig angeordneter Leistungshalbleiter (31, 32) umfasst.

5. Submodul (SM) nach einem der vorangehenden Ansprüche, bei dem die erste Schalteinrichtung (S1) einen ersten Leistungshalbleiter (35), insbesondere einen IGBT, umfasst.

6. Submodul (SM) nach Anspruch 5, bei dem die erste Schalteinrichtung (S1) einen zweiten Leistungshalbleiter (36), insbesondere einen IGBT, in Serie zum ersten Leistungshalbleiter (35) umfasst.

7. Submodul (SM) nach Anspruch 5, bei dem die erste Schalteinrichtung (S1) eine Diode (37) in Serie zum ersten Leistungshalbleiter (35) umfasst.

8. Submodul (SM) nach einem der vorangehenden Ansprüche, bei dem die zweite Schalteinrichtung (S2) einen dritten Leistungshalbleiter (35), insbesondere einen IGBT, umfasst.

9. Submodul (SM) nach Anspruch 8, bei dem die zweite Schalteinrichtung (S2) einen vierten Leistungshalbleiter (36), insbesondere einen IGBT, in Serie zum dritten Leistungshalbleiter (35) umfasst.

10. Submodul (SM) nach Anspruch 8, bei dem die zweite Schalteinrichtung (S2) eine Diode (37) in Serie zum dritten Leistungshalbleiter (35) umfasst.

11. Modularer Mehrstufenumrichter (M) mit einer Mehrzahl von Submodulen (SM), von denen wenigstens ein Teil Submodule (SM) nach einem der vorangehenden Ansprüche sind.

12. Modularer Mehrstufenumrichter (M) mit einer Steuereinrichtung, die ausgestaltet ist, für eines oder mehrere der Submodule (SM) durch Schaltung der Schalteinrichtungen (S1, S2, S3) den Ladezustand der Energiespeicher (C1, C2) auf einem ersten Pegel für einen ersten der Energiespeicher (C1) und auf einem zweiten Pegel für einen zweiten der Energiespeicher (C2) zu halten, wobei der erste Pegel im Bereich zwischen 30 und 70%, insbesondere in einem Bereich zwischen 40% und 60% des zweiten Pegels liegt.
